# EUROPEAN PATENT SPECIFICATION

(11) **EP 0 487 283 B1**
(45) Date of publication and mention of the grant of the patent: **28.09.1994**
(21) Application number: 91310612.6
(22) Date of filing: 18.11.1991
(51) Int. Cl.: B23K 26/00, B23K 26/08

(54) **Laser processing apparatus**
Gerät zur Laserbearbeitung
Appareil pour le traitement au laser

(30) Priority: 19.11.1990 JP 311447/90
(43) Date of publication of application: 27.05.1992
(73) Proprietor: KOIKE SANSO KOGYO CO., LTD, Edogawa-ku, Tokyo (JP)
(72) Inventor: Maruyama, Yoichi, Edogawa-ku, Tokyo (JP)
(74) Representative: Pacitti, Pierpaolo A.M.E.

(56) References cited:
- EP-A- 0 154 866
- V. D. I. ZEITSCHRIFT vol. 128, no. 17, September 1986, DüSSELDORF pages 659 -663; I. DECKER: 'Laserschneiden von Metallen'

## Description

The present invention relates to a laser processing apparatus, particularly to a processing apparatus for performing cutting processes and welding processes on relatively thick steel plate and the like.

### DESCRIPTION OF THE PRIOR ART:-

By utilizing a laser-light, processes for cutting, welding, marking and the like of work materials including ferrous metals of steel plate and the like and non-ferrous metals of aluminium and the like are performed. Similarly processes of cutting and carving synthetic resin materials including acryl board and the like are commonly performed.

The laser oscillators which are conventionally used have a comparatively small output and only processing on a lamina is performed. More recently laser oscillators having large outputs have been provided, and processing of comparatively thick plate has thus become practicable.

For example, when a steel plate is cut, a condensing lens is provided and a torch for jetting an oxygen gas as an assistant gas is used. A spot is formed on the surface of a steel plate in the same neighbourhood by condensing the laser-light by means of the said lens. The steel plate is cut by moving along a cutting line which is established previously while an oxygen gas is jetted along this laser-light. The said cutting is enforced by performing in a very short time continuously a momentary melting and evaporation of steel plate-basic material in accordance with the energy of the laser-light, a sudden oxidation of molten basic material according to the oxygen gas and a removal of oxidized product from the steel plate.

The laser-light which is radiated from the laser oscillator is not parallel and has a slight extensive angle. Accordingly, when the distance between the laser oscillator and the torch is changed, the diameter of a spot which is formed on the surface of the steel plate is changed and stationary cutting becomes unattainable.

Therefore, in laser processing apparatus for performing a process of secondary cutting, welding, sculpture and the like on work materials of steel plate and the like, a construction is provided such that a condensing position of the laser-light on a surface of the work materials may be maintained always at a fixed place, that is to say that the condensing light-diameter (spot-diameter) of the laser-light on the surface of the worked materials may be maintained constant.

When the processes of cutting, welding and the like on the work materials of steel plate and the like are performed by using the laser-light generally, it is known that a process having an excellent efficiency is obtained by irradiating the laser-light to the worked materials in the thin tightened state.

The article "Laserschneiden von Metallen" in V.D.I. Zeitschrift, vol 128, No 17, September 1986 Düsseldorf, pages 659-663 describes a prior art laser processing apparatus in accordance with the introductory part of Claim 1 herein. This prior art apparatus uses a system of mirrors to couple the laser beam to the workpiece, but the arrangement is such that the path length between the laser oscillator and the workpiece varies in an uncontrolled manner as the cutting torch traverses the workpiece.

However, from the results of a cutting-experiment toward thick steel plate by the present inventor, it became clear that the cutting toward the thick plate cannot be performed merely by maintaining a quality of cutting surface in a satisfactory state by virtue only of the fact that the laser-light is thin tightened. In regard to this cause, when the laser-light is thin tightened and is irradiated to the steel plate and an oxygen gas is jetted at the same time, an energy is concentrated at the irradiation point of the laser-light, and melting and evaporation of the basic material are performed suddenly in the small extent, and it is possible that a combustion of the basic material is begun from this point simultaneously, but it is considered that a heating toward the basic material is insufficient for the small melting area and little combustion quantity of the basic material.

### SUMMARY OF THE INVENTION:-

A purpose of the present invention is to provide laser processing apparatus which can perform a smooth process on thick plate.

To attain this purpose, the laser processing apparatus in accordance with the present invention comprises a laser oscillator for radiating a multi-mode laser beam; a torch jetting an assisting gas towards the work piece at a position coinciding with the infringement of said laser beam; a lens selected from a group of lenses and attached to said torch in accordance with properties of the workpiece such as thickness, composition an the like, said group of lenses respectively having different focal lengths; a frame arranged to be movable along a rail and for loading movably said torch in a direction perpendicular to said rail; and a mirror system for directing laser light from the laser oscillator to the torch; characterised in that the mirror system comprises a laser beam bending member for directing the laser beam from the laser oscillator along the direction of said rail, a laser beam reversal member for reversing the laser beam to travel oppositely in the direction of said rail, a further laser beam bending member for bending said laser beam toward said torch, and driving means for moving said laser beam reversal member in dependence on movement of said torch.

Preferably, the apparatus further comprises regulating mens for defining a movement range of the laser beam reversal member in dependence on the focal length of the lens which is attached to the torch.

In accordance with the abovementioned present invention, it is possible that the processes of cutting, welding and the like on thick plate are performed smoothly and it is possible that a satisfactory quality is maintained.

The cutting of the steel plate is provided by a physical process resulting from a melting and an evaporation of the basic material caused by the laser-light, a chemical process as a sudden oxidation of molten basic material (combustion of the basic material) caused by an oxygen gas, and a physical process resulting from a removal from the basic material of an oxidation-product caused by an oxygen gas, and especially it is well known that heating of the steel plate in the thickness direction is essential in order to continue combustion of the basic material and the width of a cutting-groove grows larger for an enlargement in the quantity of an oxidation-product in accordance with thickening in the thickness of the steel plate.

Therefore, the steel plate is melted and evaporated at a face-state, by means of the largest energy position distributed to the radius direction in the said laser-light by radiating the laser-light of multi-mode-mode to the steel plate from the torch, the torch is moved in the constructing direction of the rail and in the rectangular direction with this above-mentioned direction while the combustion product is excluded from the basic material by the oxygen gas in company with burning a molten portion in a face state by radiating the laser-light and concurrently jetting the oxygen gas, and thus it is possible for the thick plate to be cut to the desirable shape.

As a result of the present inventor's experimentation, it is confirmed as a fact that the distance between the laser oscillator and the torch is maintained at a fixed value is necessary in the laser-light of multi-mode-mode. For the sake of this, a roundabout way reversed by turning back is provided by the reverse bending member in company with bending the laser-light radiated from the laser oscillator by a bending member to the constructing direction of the rail, and the length of the roundabout way is adjusted by moving the reverse bending member according to the moving quantity of the torch, and thus it is possible that the distance between the laser oscillator and the torch is always maintained at a fixed length.

Further, in the result of the experimentation, it is confirmed that the appropriate distance between the laser oscillator and the torch changes in accordance with the focal distance of the lens which is attached to the torch. Therefore, it is possible that the most appropriate length of the laser-light course in accordance with the lens attached to the torch is established by arranging the prescription-device for prescribing a moving range of the reverse bending member.

### BRIEF DESCRIPTION OF THE DRAWING:-

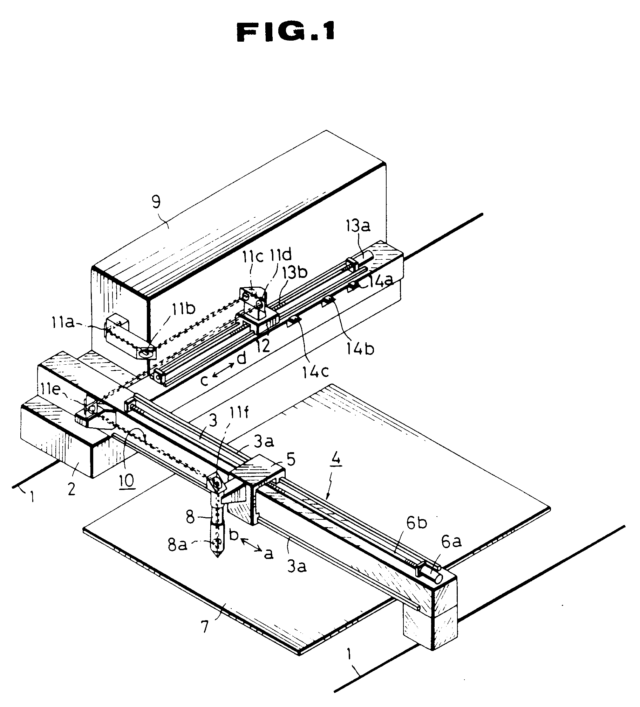

Fig. 1 is a perspective view of laser processing apparatus in accordance with the present invention.

### DETAILED DESCRIPTION OF THE PREFERRED EMBODIMENT:-

In the drawing, a frame 4 which is composed of a saddle 2 and a cross-garter 3 is placed on rails 1 which are constructed in parallel with a fixed spacing. The frame 4 is constituted to be able to move in the constructing direction (direction X) of the rail 1 by being driven by means of a motor (not shown).

The cross-garter 3 is arranged in the perpendicular direction (direction Y) to the rail 1 and plural cross-rails 3a adhere to this cross-garter 3 along the direction of Y. A carriage 5 is arranged on the cross rails 3a, and this carriage 5 is constituted to be able to move along the cross-rails 3a by a conducting member 6b of a motor 6a and a ball screw and the like attached to the cross-garter 3.

A torch 8 for jetting an oxygen gas supplied from a supplying means (not shown) is attached to the carriage 5 in company with radiating the laser-light to the worked material 7 of steel plate and the like which is placed between the rail 1 and the said carriage 5. Therefore, it is possible for the torch 8 to be moved in the desirable direction by compounding a movement to the direction of X of the frame 4 and a movement to the direction of Y of the carriage 5.

A laser oscillator 9 for radiating the laser-light of multi-mode-mode is attached to the saddle 2. A laser optical path 10 is constituted by arranging a plurality of mirrors 11a-11f between the said laser oscillator 9 and the torch 8, and the distance between the laser oscillator 9 and the torch 8 is constructed to be able to maintain a fixed length continually for this optical path 10.

For this purpose reversal apparatus 12 is arranged on the saddle 2, the said reversal apparatus forming a reversal bending member which is constituted by arranging oppositely two mirrors 11c, 11d, and further a conducting member 13b including a motor 13a which becomes a driving member for moving the said reversal apparatus 12 and a ball screw and the like arranged in the saddle 2.

The said conducting member 13b is arranged in parallel with a constructing direction of the rail 1, and the reversal apparatus 12 is constituted to be moved in the direction of the rail 1 by screwing the nut (not shown) which is provided to the reversal apparatus 12 onto the conducting member 13b. The reversal apparatus 12 is moved by driving the motor 13a in a fixed ratio with the driving quantity of the motor 6a which moves the carriage 5, and then a distance between the laser oscillator 9 and the torch 8 is conducted to be maintained at a fixed length at all times. That is to say, the reversal apparatus 12 is moved in the direction of an arrow C in response to a movement toward a direction a of an arrow of the carriage 5, further the reversal apparatus 12 is moved in the direction of an arrow d in response to a movement toward a direction b of an arrow of the carriage 5, and thus a distance between the laser oscillator 9 and the torch 8 is maintained always at a fixed value.

Therefore, the laser-light of multi-mode-mode which is radiated from the laser oscillator 9 is bent to the constructional direction of the rail 1 by mirrors 11a, 11b, and the said laser-light is reverse bent in parallel with the rail 1 again by the reversal apparatus 12 which is composed of mirrors 11c, 11d. The laser-light arrives at a mirror 11f arranged on the torch 8 by being bent to the direction of the torch 8 by a mirror 11e, and is radiated to the worked material 7 by condensing by means of the lens 8a which is attached removably to the said torch 8.

The lens 8a for condensing the laser-light of multi-mode-mode is removably attached to the torch 8.

As the result of items including thickness, quality and the like of the worked material 7, a lens having focal distance of 254mm (10 inch), a lens having focal distance of 190mm (7.5 inch) or a lens having focal distance of 127mm (5 inch) is attached to the torch 8 by selection as necessary.

When the focal distance of the lens 8a which is attached to the torch 8 is varied, it becomes necessary that the distance between the laser oscillator 9 and the torch 8 is changed in response to this variation of the focal distance.

Therefore, in the present embodiment, the sensors 14a-14c which become the prescription member for prescribing the moving range of the said reversal apparatus 12 are arranged in the neighbourhood of the conducting member 13b on which the reversal apparatus 12 is moved. As far as these sensors 14a-14c are concerned, it is possible to use a switch and the like for generating a signal by detecting in a non-contact fashion the apparatus 12 or a switch for generating the signal by contacting with the reversal apparatus 12. The sensor 14b is set at the position corresponding to a lens having focal distance of 190mm (7.5 inch) in company with setting a sensor 14a at the position corresponding to the distance between the torch 8 and a laser oscillator 9 when a sensor 14a is attached to a lens having focal distance of 254mm (10 inch) in the torch 8, further a sensor 14c is set at the position corresponding to a lens having focal distance of 5 inch, an input of an information of focal distance of a lens 8a attached to the torch 8 in advance of enforcement of processing toward the worked material 7 is performed in the controlling portion (not shown), and it is possible therefore that the distance between the laser oscillator and the torch 8 is maintained at the optimum distance as required by the lens 8a used by selecting either of sensors 14a-14c.

Further, in the present embodiment, the direction and quantity of revolution of a motor (not shown) for moving the frame 4, a motor 6a for moving the carriage and a motor 13a for moving the reversal apparatus 12 are controlled by the numerical control apparatus respectively, which is constituted to be able to control a moving direction and a moving velocity of the torch 8 in response to diagrammatic information, plate-thickness information and the like which the input was performed previously.

When a worked material 7 is cut by using the laser processing apparatus which is constituted as mentioned above, first of all inputs of a diagrammatic information to be cut, a plate-thickness information of the work material 7, a focal distance information of the lens 8a and the like are performed, and the torch 8 is moved to the fixed place on the work material 7, and the laser-light of multi-mode-mode is radiated from the laser oscillator 9, at the same time the cutting is started by jetting an oxygen gas as an assistant gas, and afterwards it is possible that a fixed diagram is cut by moving to the directions of X and Y in response to the information which the inputs of the frame 4 and the carriage 5 are performed. It is possible that the distance between the laser oscillator 9 and the torch 8 is maintained to a fixed length by moving the reversal apparatus 12 by means of the driving of the motor 13a in response to the moving quantity in the direction of Y of the carriage 5.

In the present embodiment, a group of the reversal apparatus 12 is arranged in the saddle 2, but it is satisfactory that the reversal apparatus's 12 more than two groups are provided without restriction of this number.

Further, in the present embodiment, a processing apparatus for cutting the worked material 7 is explained by radiating the laser-light of multi-mode-mode from the torch 8, but when the worked material 7 is a welding member, it is possible that a welding operation in which the depth of penetration is deep is performed by using the laser-light of multi-mode-mode. It is satisfactory that inert gases including argon gas, carbonic acid gas and the like are used for the assistant gas in this case.

## Claims

1. A laser processing apparatus, comprising:
a laser oscillator (9) for radiating a multi-mode laser beam;
a torch (8) jetting an assistant gas towards the work piece at a position coinciding with the impingement of said laser beam;
a lens (8a) selected from a group of lenses and attached to said torch (8) in accordance with properties of the workpiece such as thickness, composition and the like, said group of lenses respectively having different focal lengths;
a frame (4) arranged to be movable along a rail (1) and for loading movably said torch (8) in a direction perpendicular to said rail (1); and
a mirror system for directing laser light from the laser oscillator (9) to the torch (8);
characterised in that the mirror system comprises a laser beam bending member (11b) for directing the laser beam from the laser oscillator (9) along the direction of said rail (1), a laser beam reversal member (12) for reversing the laser beam to travel oppositely in the direction of said rail (1), a further laser beam bending member (11e) for bending said laser beam toward said torch (8), and driving means (13a, 13b) for moving said laser beam reversal member (12) in dependence on movement of said torch (8).

2. A laser processing apparatus according to claim 1, further comprising regulating means (14) for defining a movement range of said laser beam reversal member (12) in dependence on the focal length of the lens (8a) attached to the torch (8).

## Patentansprüche

1. Laser-Bearbeitungsgerät, umfassend:
- einen Laser-Oszillator (9), der einen Multimode-Laserstrahl ausstrahlt,
- eine Düse (8), aus der ein Hilfsgas zum Werkstück hin ausströmt, und zwar an der Stelle, an der der Laserstrahl auftrifft,
- eine Linse (8a), die aus einer Gruppe Linsen ausgewählt wurde und an der Düse (8) angebracht ist, und zwar entsprechend den Merkmalen des Werkstücks, wie etwa Dicke, Zusammensetzung u.ä., wobei die Linsen der Gruppe jeweils verschiedene Brennweiten aufweisen,
- einen Rahmen (4), der beweglich an einer Schiene (1) angeordnet ist und durch den die Düse (8) senkrecht zu der Schiene (1) beweglich vorgespannt ist; und
- ein Spiegelsystem, das das Laserlicht vom Laser-Oszillator (9) zu der Düse (8) lenkt;
dadurch gekennzeichnet, daß das Spiegelsystem ein Laserstrahl-Umlenkteil (11b) zum Lenken des Laserstrahls vom Laser-Oszillator (9) entlang der Schiene (1), ein Laserstrahl-Umkehrteil (12) zum Umkehren des Laserstrahls in entgegengesetzter Richtung entlang der Schiene (1), ein weiteres Laserstrahl-Umlenkteil (11e) zum Umlenken des Laserstrahls zur Düse (8) und Antriebsvorrichtungen (13a, 13b) zum Bewegen des Laserstrahl-Umkehrteils (12) in Abhängigkeit von der Bewegung der Düse (8) aufweist.

2. Laser-Bearbeitungsgerät nach Anspruch 1,
das weiterhin eine Regelvorrichtung (14) aufweist, die einen Bewegungsbereich des Laserstrahl-Umkehrteils (12) in Abhängigkeit von der Brennweite der an der Düse (8) angebrachten Linse (8a) bestimmt.

## Revendications

1. Appareil de traitement laser, comprenant :
un oscillateur laser (9) pour émettre un faisceau laser multimode ;
une torche (8) éjectant un gaz auxiliaire en direction de la pièce de travail à un emplacement coïncidant avec l'impact dudit faisceau laser ;
une lentille (8a) choisie parmi un groupe de lentilles et fixée à ladite torche (8) en fonction des propriétés de la pièce de travail telles que l'épaisseur, la composition et autres, les lentilles dudit groupe présentant différentes distances focales ;
un support (4) conçu pour être mobile le long d'un rail (1) et pour mettre en place de façon mobile ladite torche (8) dans une direction perpendiculaire audit rail (1) ; et
un dispositif de miroirs pour guider la lumière laser de l'oscillateur laser (9) à la torche (8);
caractérisé en ce que le dispositif de miroirs comprend un élément (11b) d'incurvation de faisceau laser pour guider le faisceau laser à partir de l'oscillateur laser (9) suivant la direction dudit rail (1), un élément (12) de renvoi de faisceau laser pour renvoyer le faisceau laser afin qu'il se dirige en sens inverse dans la direction dudit rail (1), un autre élément (11e) d'incurvation de faisceau laser pour incurver ledit faisceau laser en direction de ladite torche (8), et des moyens d'entraînement (13a, 13b) pour déplacer l'élément (12) de renvoi de faisceau laser en fonction du déplacement de ladite torche (8).

2. Appareil de traitement laser selon la revendication 1, comprenant en outre des moyens de réglage (14) pour délimiter une plage de déplacement dudit élément (12) de renvoi de faisceau laser en fonction de la distance focale de la lentille (8A) fixée à la torche (8).
